# EUROPÄISCHE PATENTSCHRIFT

(11) **EP 1 820 307 B1**
(45) Veröffentlichungstag und Bekanntmachung des Hinweises auf die Patenterteilung: **11.04.2012**
(21) Anmeldenummer: 05797253.1
(22) Anmeldetag: 11.10.2005
(51) Int. Cl.: H04L 12/56, G06F 11/20

(54) **VERFAHREN ZUM NACHWEIS DER VERF]GBARKEIT VON SYSTEMKOMPONENTEN EINES REDUNDANTEN KOMMUNIKATIONSSYSTEMS**
PROCESS FOR DETECTING THE AVAILABILITY OF REDUNDANT COMMUNICATION SYSTEM COMPONENTS
PROCEDE PERMETTANT DE CONTROLER LA DISPONIBILITE DE COMPOSANTES DANS UN SYSTEME DE COMMUNICATION REDONDANT

(30) Priorität: 26.11.2004 DE 102004057209
(43) Veröffentlichungstag der Anmeldung: 22.08.2007
(73) Patentinhaber: Nokia Siemens Networks GmbH & Co. KG, 81541 München (DE)
(72) Erfinder: HÖF, Jonas, 81739 München (DE); LÖBIG, Norbert, 64291 Darmstadt (DE); TEGELER, Jürgen, 82377 Penzberg (DE); TINNACHER, Michael, A-8580 Köflach (AT); WALLNER, Dieter, A-8052 Graz (AT)
(86) Internationale Anmeldenummer: PCT/EP2005/055173
(87) Internationale Veröffentlichungsnummer: WO 2006/056506

(56) Entgegenhaltungen:
- EP-A- 1 133 197
- DE-A1- 10 040 467
- US-A- 5 974 114
- US-A1- 2002 073 409

## Beschreibung

Die Erfindung betrifft ein Verfahren zum Nachweis der Verfügbarkeit von Systemkomponenten eines redundant aufgebauten Kommunikationssystems, bei dem Hardwareeinrichtungen, die die Systemkomponenten des Kommunikationssystems betreiben, zumindest doppelt vorhanden sind, wobei im Normalbetrieb des Kommunikationssystems manche Systemkomponenten aktiv und die für diese redundant vorhandenen Systemkomponenten im Standbymodus betrieben werden und bei Ausfall einer oder mehrerer Hardwareeinrichtungen die redundant vorhandenen Systemkomponenten die Funktion der bislang aktiv betriebenen Systemkomponenten übernehmen.

Aus der Druckschrift US 2002/073409 A1 (LUNDBACK ARNE ET AL) 13. Juni 2002 (2002-06-13) ist eine Telekommunikationsplattform bekannt, welche ein Cluster von Prozessoren umfasst, die plattformzentrale Verarbeitungsfunktionen ausführen. Die plattformzentralen Verarbeitungsfunktionen schließen eine Cluster-Unterstützungsfunktion ein, welche auf das Cluster der Prozessoren verteilt ist. Aus Gründen der Redundanz sind Programme über das Cluster verteilt, so dass zumindest einige der Prozessoren des Clusters aktive Versionen von zumindest einigen der Programme haben und standby Versionen von anderen der Programme, d.h. eine Mischung von Zuordnungen von aktiven und standby Versionen von Programmen.

Aus der Druckschrift US-A-5 974 114 (BLUM ET AL) 26. Oktober 1999 (1999-10-26) sind ein Verfahren und eine Vorrichtung bekannt zur Verarbeitung von Rufdaten. Hierbei repliziert ein erster Server in aktivem Modus Rufdaten zu einem zweiten Server im Standbymodus. Der erste Server sowie andere Netzwerk-Geräte werden durch den zweiten Server hinsichtlich einer Fehlerbedingung überwacht. Wird eine Fehlerbedingung erkannt, so wird der erste Server in den Standbymodus geschaltet, und der zweite Server wird in den aktiven Modus geschaltet.

Ein redundanter Aufbau von Kommunikationssystemen wird eingesetzt, um beim Ausfall einzelner Komponenten die geforderte Systemfunktion durch die entsprechenden redundanten Komponenten weiterhin sicherzustellen. Dadurch erhöht sich die Verfügbarkeit und die Zuverlässigkeit des Gesamtsystems. Entscheidend für die ordnungsgemäße Funktionsübernahme durch die redundanten Komponenten ist natürlich deren einwandfreie Funktion.

Da die redundanten Komponenten jedoch im Normalbetrieb nicht genutzt werden, können Fehler an beziehungsweise in ihnen bis zum Ausfall der gerade benutzten Komponenten unbemerkt bleiben. Diese Betriebsart wird üblicherweise als Aktiv/Standby-Redundanz bezeichnet. Dabei liefern die aktiven Komponenten die entsprechende Funktion. Die im Standbymodus befindlichen Komponenten stehen zur Verfügung, um im Fehlerfall die Funktion der gegenwärtig aktiven Komponenten zu übernehmen.

Wenn ein oder mehrere Fehler der Standby-Komponenten jedoch erst dann erkennbar wird/werden, wenn sie die Funktion wegen Fehlern der aktiven Komponenten übernehmen sollen, führt dies zum Totalausfall des Systems.

Die Verfügbarkeit der Standby-Komponenten muss daher ebenfalls laufend sichergestellt werden. Fehler der Standby-Komponenten müssen erkannt und durch entsprechende Reparaturmaßnahmen behoben werden, um die Verfügbarkeit des Gesamtsystems zu gewährleisten.

Bisher wurde zum Nachweis der Verfügbarkeit der Standby-Komponenten beispielsweise ein periodischer Selbsttest dieser Standby-Komponenten durchgeführt. Die Aussagekraft des Selbsttests hängt natürlich von den dazu verwendeten Prüfungen und der Prüfintensität ab. Je näher die Prüfbedingungen an der im Aktivbetrieb geforderten Funktion sind, um so eher ist sichergestellt, dass nicht trotz ständiger Prüfung die Übernahme der Funktion durch die Standby-Komponenten nach einem Fehler der aktiven Komponente fehlschlägt. Als hauptsächlicher Nachteil ist hier der Aufwand für einen aussagekräftigen Verfügbarkeitsnachweis zu nennen, zumal der Aufwand ausschließlich für den Verfügbarkeitsnachweis erbracht werden muss.

Für Vermittlungssysteme, die in Aktiv/Standby-Redundanz betrieben werden, wird in den Vereinigten Staaten von Amerika eine sogenannte Routineumschaltung zwingend gefordert. Die Standby-Komponenten übernehmen dazu periodisch die Funktion von den aktiven Komponenten. Im Erfolgsfall ist die Verfügbarkeit der zuvor im Standbymodus betriebenen Komponenten somit nachgewiesen. Im Fehlerfall wird auf die bereits zuvor als aktiv betriebenen Komponenten zurückgeschaltet. Daran schließt sich eine detaillierte Analyse der Fehlerursache an.

Der Aufwand für die Routineumschaltung alleine wird in aller Regel geringer sein als für einen aussagekräftigen Selbsttest der Standby-Komponenten. Als anhaftender Nachteil bei der Routineumschaltung ist jedoch die Umschaltung an sich anzusehen, da sie die Funktion des Systems zumindest kurzzeitig beeinträchtigt. Für die Dauer der Umschaltung steht die Funktion des Systems nicht oder nur eingeschränkt zur Verfügung. Beispielsweise in Vermittlungssystemen können während der Umschaltung Verbindungsversuche in beachtlichem Umfang abgewiesen werden oder für bereits bestehende Verbindungen bestimmte Merkmale, wie Konferenzschaltung, nach dem Umschalten nicht mehr zur Verfügung stehen. Solche Einschränkungen sind, wenn überhaupt, nur mit ganz erheblichem Aufwand zu reduzieren oder gar zu vermeiden.

Ein weiterer Nachteil eines reinen Aktiv/Standby-Betriebs sind die Anschaffungs- und Unterhaltskosten für die Standby-Komponenten, da sie lediglich zur Übernahme der Funktion beim Ausfall der aktiven Komponenten vorgehalten werden. Bei einer strikten Redundanzpaarbildung, bei der jeder aktiven Komponente eine Standby-Komponente zugeordnet ist, fallen hierbei bereits die doppelten Hardwarekosten an, im Vergleich zum Betrieb ohne Redundanz.

Es ist daher Aufgabe der Erfindung, ein Verfahren zum Nachweis der Verfügbarkeit von Systemkomponenten eines redundant aufgebauten Kommunikationssystems zur Verfügung zu stellen, das ohne Zusatzaufwand einen genaueren und zuverlässigeren Nachweis der Verfügbarkeit der Systemkomponenten ermöglicht und das die Nachteile der bisher eingesetzten Routineumschaltung vollständig vermeidet.

Diese Aufgabe wird durch die Merkmale des unabhängigen Patentanspruches 1 gelöst. Vorteilhafte Weiterbildungen der Erfindung sind Gegenstand untergeordneter Ansprüche.

Der Erfinder hat erkannt, dass ein aussagekräftiger und zuverlässiger Nachweis der Verfügbarkeit von Systemkompo-nenten eines redundant aufgebauten Kommunikationssystems ohne zusätzlichen Hard- und/oder Softwareaufwand erbracht werden kann, wenn die Systemkomponenten des Kommunikationssystems zu Ressource-Gruppen zusammengefasst werden und diese gezielt auf die Hardwareeinrichtungen verteilt werden. Beispielsweise in Vermittlungssystemen sind die Aufgaben der einzelnen Soft- und Hardwareeinheiten ähnlich oder sogar identisch, so dass eine Zusammenfassung zu aufgabespezifischen Ressource-Gruppen ermöglicht wird.

Demgemäss schlägt der Erfinder vor, das bekannte Verfahren zum Nachweis der Verfügbarkeit von Systemkomponenten eines redundant aufgebauten Kommunikationssystems, bei dem Hardwareeinrichtungen, die die Systemkomponenten des Kommunikationssystems betreiben, zumindest doppelt vorhanden sind, wobei im Normalbetrieb des Kommunikationssystems manche Systemkomponenten aktiv und die für diese redundant vorhandenen Systemkomponenten im Standbymodus betrieben werden und bei Ausfall einer oder mehrerer Hardwareeinrichtungen die redundant vorhandenen Systemkomponenten die Funktion der bislang aktiv betriebenen Systemkomponenten übernehmen, dahingehend zu verbessern, dass die Systemkomponenten und die von diesen zumindest verwendeten Kommunikationskanäle, Softwareprozesse und Daten funktions- und/oder aufgabenabhängig zu Ressource-Gruppen zusammengefasst und betrieben werden und jede Ressource-Gruppe auf mindestens zwei Hardwareeinrichtungen ablauffähig ist und im Normalbetrieb und zum Nachweis der Verfügbarkeit der Systemkomponenten eine Ressource-Gruppe auf genau einer einzigen Hardwareeinrichtung aktiv und die mindestens eine redundante Ressource-Gruppe auf mindestens einer weiteren Hardwareeinrichtung im Standbymodus betrieben wird, wobei die Daten der aktiven Ressource-Gruppe automatisch zu den Daten der redundant zugeordneten Ressource-Gruppe repliziert werden.

Hierdurch wird erreicht, dass auf jeder Hardwareeinrichtung mindestens eine Ressource-Gruppe aktiv betrieben wird. Damit ist keine der Hardwareeinrichtungen ausschließlich im Standbymodus. Es werden also alle Hardwareeinrichtungen funktionsfähig und aktiv betrieben. Insbesondere werden die Nachteile der bisher eingesetzten Routineumschaltung vollständig vermieden, so zum Beispiel die unvermeidbare Beeinträchtigung der Systemfunktion im Normalbetrieb bei der Routineumschaltung.

Die gezielte Verteilung der Ressource-Gruppen erlaubt weiterhin eine bessere Ausnutzung der Hardwareeinrichtungen als im reinen Aktiv/Standby-Betrieb. Dies ist erkennbar günstig für mehr als zwei Hardwareeinrichtungen und mehr als zwei Ressource-Gruppen, die auf ihnen ablauffähig sind, weil die Wahrscheinlichkeit sinkt, dass eine Hardwareeinrichtung alle Ressource-Gruppen in der aktiven Rolle betreiben muss. Jedoch selbst bei nur zwei Hardwareeinrichtungen als Redundanzpaar und jeweils zwei Ressource-Gruppen ergeben sich zum Beispiel auf Rechnern mit UNIX-ähnlichen Betriebssystemen Vorteile durch die Verteilung.

So laufen UNIX-Betriebssysteme bis zu einer bestimmten CPU-Auslastung deutlich stabiler als bei höherer Auslastung. Im reinen Aktiv/Standby-Betrieb muss man daher die Beschaltung so wählen, dass die CPU-Auslastung einen stabilen Langzeitbetrieb erlaubt, da die jeweils aktive Hardwareeinrichtung stets die volle Last bewältigen muss. Bei zwei im Normalbetrieb auf die beiden Hardwareeinrichtungen verteilten Ressource-Gruppen fällt die Summenlast dagegen nur bei Ausfall einer Hardwareeinrichtung auf der verbliebenen an und auch nur für die Dauer des Ausfalls beziehungsweise der Reparatur.

Das Risiko einer Instabilität durch die höhere Last steigt somit auch nur in diesem vergleichsweise kurzen Zeitraum, das heißt es müssen in diesem Zeitraum zum Beispiel noch Lastspitzen auftreten, um die Stabilität zu gefährden.

Durch die gezielte Verteilung der Ressource-Gruppen ergibt sich also die Möglichkeit, im fehlerfreien Fall mehr Verkehr über jede der Hardwareeinrichtungen abwickeln zu können, oder zumindest bei gleicher Beschaltung, wie im reinen Aktiv/Standby-Betrieb, über mehr Reserve zum Abfangen von Lastspitzen zu verfügen.

Optional kann im Verfahren angezeigt werden, welche Systemkomponente und/oder Ressource-Gruppe gerade aktiv oder im Standbymodus betrieben wird. Die Anzeigeoption ist beispielsweise dann vorteilhaft, wenn bestimmte Hardwareeinrichtungen zu Reparaturzwecken oder zur Aktualisierung der Software außer Betrieb genommen werden sollen.

Alternativ oder ergänzend zum Anzeigen der aktiven beziehungsweise im Standbymodus befindlichen Elemente sollen die aktiven Systemkomponenten und/oder aktiven Ressource-Gruppen bei Bedarf in den Standbymodus oder entgegengesetzt umgeschaltet werden können. Hierdurch können bestimmte Hardwareeinrichtungen zu Reparaturzwecken oder zur Aktualisierung der Software außer Betrieb genommen werden.

Das Umschalten vom aktiv in den Standbymodus beziehungsweise umgekehrt kann durch die Softwareprozesse oder die vom Softwareprozess verwendeten Systemkomponenten vorgenommen werden.

Beispielsweise kann eine Failover-Kontrollkomponente die Umschaltung vornehmen. Diese Failover-Kontrollkomponenten sollten aus Redundanzgründen über die Hardwareeinrichtungen, wie die Ressource-Gruppen, verteilt sein. Durch die Verteilung ist es wiederum notwendig, dass die Failover-Kontrollkomponenten, die für den Betrieb der Ressource-Gruppen relevanten Statusinformationen kennen. Laufen die Failover-Kontrollkomponenten auf den Hardwareeinrichtungen, wo auch die Ressource-Gruppen betrieben werden, können sie die relevanten Statusinformationen, wie beispielsweise CPU-Leistung, Hardwareverfügbarkeit, Verfügbarkeit der Kommunikationskanäle, Replikationsstatus etc., selbst ermitteln und an die Partner-Failover-Kontrollkomponenten auf den anderen Hardwareeinrichtungen weitergeben. Der korrekte Ablauf der Failover-Kontrollkomponenten und der Datenaus-tausch zwischen ihnen benötigt selbst zumindest CPU-Leistung und Kommunikationsbandbreite, die durch geeignete Maßnahmen, wie Priorisierung, Reservierung von Budgets/Bandbreite, dedizierte/hochverfügbare Kommunikationskanäle oder dergleichen, sichergestellt sein muss. Dies kann beispielsweise auch dadurch erreicht werden, dass die Failover-Kontrollkomponenten auf dedizierten Hardwareeinrichtungen ablaufen, die keine oder in wesentlich geringerem Umfang andere Aufgaben zu bearbeiten haben.

Für das Verfahren ist es weiterhin von Vorteil, wenn nur diejenige Failover-Kontrollkomponente eine Umschaltung vornimmt, die in der aktiven Rolle betrieben wird und jeweils die Ressource-Gruppe einer anderen Hardwareeinrichtung umschaltet. Hierdurch kann die Failover-Kontrollkomponenten als Entscheidungsinstanz von der Logik der Rollenumschaltung der Ressource-Gruppen als Ausführungsinstanz entkoppelt werden. Diese Entkopplung ist eine wesentliche Voraussetzung für die problemlose Skalierung der Failover-Kontrollkomponenten bei entsprechender Verteilung. Die Logik der Rollenumschaltung der Ressource-Gruppen ist stets auf eine Hardwareeinrichtung beschränkt. Sie muss beispielsweise die korrekte Reihenfolge der Umschaltung der einzelnen Ressourcen einschließlich Überwachung und Fehlerbehandlung sicherstellen. Die Failover-Kontrollkomponenten wiederum können dadurch auf einer deutlich höheren logischen Ebene operieren und bleiben somit auch für komplexere Verteilungsszenarien vergleichsweise einfach zu implementieren und zu testen.

Die Hardwareeinrichtungen können zumindest als Redundanzpaar, vorzugsweise als Redundanztripel, betrieben werden, wobei auf einer Hardwareeinrichtung zumindest zwei Ressource-Gruppen betrieben werden.

Im folgenden wird die Erfindung anhand der bevorzugten Ausführungsbeispiele mit Hilfe der Figuren näher beschrieben, wobei darauf hingewiesen wird, dass nur die für das unmittelbare Verständnis der Erfindung wesentlichen Elemente gezeigt sind. Hierbei werden die folgenden Bezugszeichen verwendet:
1: erste Hardwareeinrichtung; 1.1: erste Ressource-Gruppe der ersten Hardwareeinrichtung; 1.1.1: Daten A; 1.1.2: Daten B; 1.1.3: Daten C; 1.1.4: erster Softwareprozess der ersten Ressource-Gruppe der ersten Hardwareeinrichtung; 1.1.5: zweiter Softwareprozess der ersten Ressource-Gruppe der ersten Hardwareeinrichtung; 1.2: zweite Ressource-Gruppe der ersten Hardwareeinrichtung; 1.2.1: replizierte Daten X; 1.2.2: Softwareprozess der zweiten Ressource-Gruppe der ersten Hardwareeinrichtung; 1.3: dritte Ressource-Gruppe der ersten Hardwareeinrichtung; 1.4: Ausfall der ersten Hardwareeinrichtung; 1.5: Failover-Kontrollkomponente (FO-CTRL) der ersten Hardware; 2: zweite Hardwareeinrichtung; 2.1: erste Ressource-Gruppe der zweiten Hardwareeinrichtung; 2.1.1: replizierte Daten A; 2.1.2: replizierte Daten B; 2.1.3: replizierte Daten C; 2.1.4:erster Softwareprozess der ersten Ressource-Gruppe der zweiten Hardwareeinrichtung; 2.1.5: zweiter Softwareprozess der ersten Ressource-Gruppe der zweiten Hardwareeinrichtung; 2.2: zweite Ressource-Gruppe der zweiten Hardwareeinrichtung; 2.2.1: Daten X; 2.2.2: Softwareprozess der zweiten Ressource-Gruppe der zweiten Hardwareeinrichtung; 2.3: dritte Ressource-Gruppe der zweiten Hardwareeinrichtung; 2.5: Failover-Kontrollkomponente der zweiten Hardware; 3: dritte Hardwareeinrichtung; 3.1: erste Ressource-Gruppe der dritten Hardwareeinrichtung; 3.2: zweite Ressource-Gruppe der dritten Hardwareeinrichtung; 3.3: dritte Ressource-Gruppe der dritten Hardwareeinrichtung; 3.4: vierte Ressource-Gruppe der dritten Hardwareeinrichtung; 3.5: Failover-Kontrollkomponente der dritten Hardware; 4: vierte Hardwareeinrichtung; 4.1: erste Ressource-Gruppe der vierten Hardwareeinrichtung; 4.2: zweite Ressource-Gruppe der vierten Hardwareeinrichtung; 4.3: dritte Ressource-Gruppe der vierten Hardwareeinrichtung; 4.4: vierte Ressource-Gruppe der vierten Hardwareeinrichtung; 4.5: Failover-Kontrollkomponente der vierten Hardware; 5: Kommunikationskanäle; 6: Datenreplikation; 7: Aktive FO-CTRL der HW 1 steuert die Hardware 3 und 4; 8: Aktive FO-CTRL der HW 3 steuert die Hardware 1 und 2; 9: Zyklischer Austausch von Statusdaten; 10: Redundanzpaar; 11: Redundanztripel; A: Komponenten sind aktiv; S: Komponenten sind im Standbymodus; S1: erster Standbymodus; S2:zweiter Standbymodus.

Es zeigen im Einzelnen:
- Figur 1:: Redundanzpaar mit jeweils zwei Ressource-Gruppen im Normalbetrieb;
- Figur 2:: Redundanzpaar aus Figur 1 bei Ausfall der ersten Hardwareeinrichtung;
- Figur 3:: Redundanztripel mit drei Ressource-Gruppen im Normalbetrieb;
- Figur 4:: Redundanztripel mit jeweils drei Ressource-Gruppen im Normalbetrieb;
- Figur 5:: Zwei Redundanzpaare, bei denen jedes Redundanzpaar durch einen Failover-Kontrollprozess des anderen Redundanzpaares gesteuert wird.

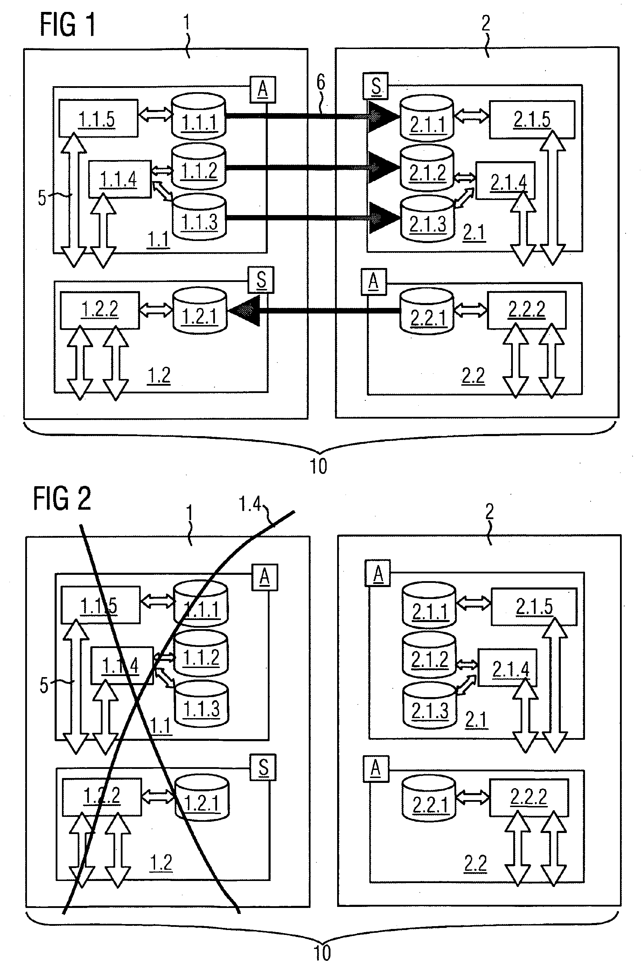

Die Figur 1 zeigt zwei Hardwareeinheiten 1 und 2, die ein Redundanzpaar 10 bilden, im Normalbetrieb. Die redundante Absicherung von Hardwareeinheiten, durch gedoppelten Aufbau, ist bereits bekannt.

Im Unterschied zu bisher bekannten Redundanzpaaren verfügt im Redundanzpaar 10 aus Figur 1 sowohl die erste Hardwareeinheit 1 als auch die zweite Hardwareeinheit 2 über jeweils zwei Ressource-Gruppen 1.1, 1.2 und 2.1, 2.2. Die einzelnen Ressource-Gruppen 1.1, 1.2 und 2.1, 2.2 können dabei aufgabenspezifisch durch Zusammenfassen entsprechender Komponenten gebildet werden, wobei in einer Ressource-Gruppe 1.1, 1.2 und 2.1, 2.2 unter anderem bestimmte Daten, diese Daten nutzende Softwareprozesse und Kommunikationskanäle 5 zusammengefasst werden.

Beispielsweise laufen auf der ersten Ressource-Gruppe 1.1 der ersten Hardwareeinheit 1 zwei Softwareprozesse 1.1.4 und 1.1.5, wobei der erste Softwareprozess 1.1.4 auf die Daten 1.1.2 und 1.1.3 zugreift und der zweite Softwareprozess 1.1.5 auf die Daten 1.1.1 zugreift. Auf der zweiten Ressource-Gruppe 1.2 der ersten Hardwareeinheit 1 würde ein Softwareprozess 1.2.2 laufen, der auf die Daten 1.2.1 zugreift. Bei Vermittlungssystemen, wie zum Beispiel Media-Gateways, dienen die Kommunikationskanäle 5 in der Regel zur Kommunikation der Softwareprozesse mit externen Kommunikationspartnern.

Entsprechend dem redundanten Aufbau des Redundanzpaares 10 sind die lauffähigen Softwareprozesse, die Kommunikationskanäle und die Daten der ersten Hardwareeinheit 1 quasi "spiegelsymmetrisch" auf der zweiten Hardwareeinheit 2 vorhanden.

Als weiterer Unterschied zu bekannten Redundanzpaaren befindet sich bei dem Redundanzpaar 10 aus Figur 1 nicht eine Hardwareeinheit vollständig im aktiven und die andere Hardwareeinheit vollständig im Standbymodus, sondern es wird genau eine Ressource-Gruppe aktiv auf einer Hardwareeinheit betrieben. Somit ist jede Hardwareeinheit aktiv.

Welche der Ressource-Gruppen 1.1, 1.2 und 2.1, 2.2 gerade aktiv und welche sich im Standbymodus befindet, wird durch ein A oder ein S in der rechten oder linken oberen Ecke der Ressource-Gruppe 1.1, 1.2 und 2.1, 2.2 symbolisiert. In der ersten Hardwareeinheit 1 ist die erste Ressource-Gruppe 1.1 aktiv und die zweite Ressource-Gruppe 1.2 im Standbymodus. In der zweiten Hardwareeinheit 2 ist die erste Ressource-Gruppe 2.1 im Standbymodus und die zweite Ressource-Gruppe 2.2 aktiv. Durch diesen besonderen Aktiv/Standby-Betrieb der beiden Hardwareeinheiten 1 und 2 und der Ressource-Gruppen 1.1, 1.2 und 2.1, 2.2 wird sichergestellt, dass im fehlerfreien Normalbetrieb des Redundanzpaares 10 mindestens eine Ressource-Gruppe 1.1 und 2.2 auf jeder Hardwareeinheit in der aktiven Rolle ist und sich somit keine Hardwareeinheit, weder die erste Hardwareeinheit 1 noch die zweite Hardwareeinheit 2, vollständig im Standbymodus befindet. Im Normalbetrieb werden also die korrekte Funktion und Verfügbarkeit aller Hardwareeinheiten 1 und 2 gewährleistet und kontrolliert.

Weiterhin findet im Normalbetrieb des Redundanzpaares 10 eine Datenreplikation 6 aller Daten, also eine Datenkopie, der aktiven Ressource-Gruppen 1.1 und 2.2 zu den im Standbymodus befindlichen Ressource-Gruppen 2.1 und 1.2 statt. So werden die Daten 1.1.1 bis 1.1.3 der ersten und aktiven Ressource-Gruppe 1.1 der ersten Hardwareeinheit 1 kontinuierlich auf die der ersten und im Standbymodus befindlichen Ressource-Gruppe 2.1 der zweiten Hardwareeinheit 2 repliziert. Analog dazu werden die Daten 2.2.1 der zweiten und aktiven Ressource-Gruppe 2.1 der zweiten Hardwareeinheit 2 kontinuierlich auf die der zweiten und im Standbymodus befindlichen Ressource-Gruppe 1.2 der ersten Hardwareeinheit 1 repliziert. Hierdurch stehen diese Daten im Falle eines Fehlers und/oder dem Ausfall einer oder mehrerer Hardwareeinheiten bei der Funktionsübernahme durch die Standby-Komponenten der redundanten Hardwareeinheit zur Verfügung.

Die Figur 2 zeigt das Redundanzpaar 10 aus Figur 1, wobei die erste Hardwareeinrichtung 1 ausgefallen ist. Der Ausfall 1.4 der erste Hardwareeinrichtung 1 wird durch das Durchstreichen dieser Hardwareeinrichtung dargestellt. Bei Ausfall 1.4 der ersten Hardwareeinrichtung 1, der durch physischen Fehler oder Softwarefehler bedingt sein kann, wird die bislang in der aktiven Rolle betriebene Ressource-Gruppe 1.1 (in Figur 1) und deren Funktion in Echtzeit auf die Hardwareeinrichtung 2 umgeschaltet, die die Ressource-Gruppe 2.1 bisher im Standbymodus betrieben hat. Durch die Datenreplikation der essentiellen Daten ist der Ausfall beziehungsweise die Nichtverfügbarkeit des Systems durch die Umschaltung minimiert. Nach Ausfall 1.4 der Hardwareeinheit 1 sind nun beide Ressource-Gruppen 2.1 und 2.2 der Hardwareeinheit 2 im aktiven Modus. Für das Gesamtsystem stehen also alle Funktionen zur Verfügung.

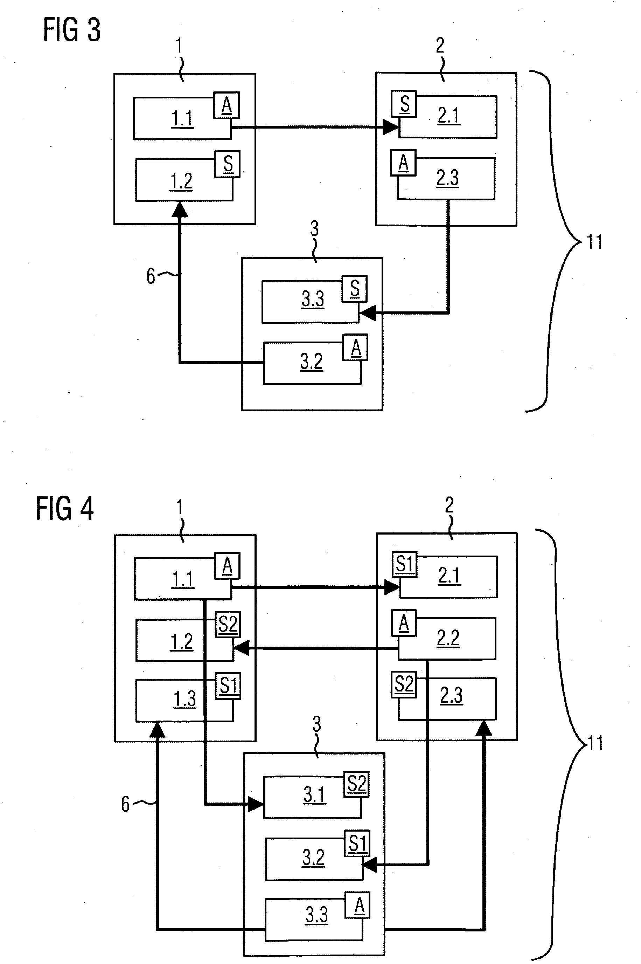

Die Figur 3 zeigt ein Redundanztripel 11, also drei redundant angeordnete Hardwareeinheiten 1, 2 und 3 mit drei Ressource-Gruppen im Normalbetrieb. Innerhalb der ersten Hardwareeinheit 1 ist die erste Ressource-Gruppe 1.1 aktiv und die zweite Ressource-Gruppe 1.2 im Standbymodus. Innerhalb der zweiten Hardwareeinheit 2 ist die erste Ressource-Gruppe 2.1 im Standbymodus und die dritte Ressource-Gruppe 2.3 aktiv. Innerhalb der dritten Hardwareeinheit 3 ist die dritte Ressource-Gruppe 3.3 im Standbymodus und die zweite Ressource-Gruppe 3.2 aktiv. Es ist also auf jeder der drei Hardwareeinheiten 1, 2 und 3 jeweils mindestens eine aktive Ressource-Gruppe 1.1, 2.3 und 3.2. Die korrekte Funktion des Redundanztripels 11 im Normalbetrieb ist somit ein eindeutiges Indiz für die korrekte Funktion aller drei Hardwareeinheiten 1, 2 und 3. Damit das System korrekt funktioniert, muss mindestens eine erste, eine zweite und eine dritte Ressource-Gruppe aktiv arbeiten. Durch die ständige Datenreplikation 6 ist es wiederum möglich die Funktion einer Hardwareeinheit bei Ausfall durch eine andere Hardwareeinheit zu übernehmen.

Beispielhaft wird bei einem Ausfall der dritten Hardwareeinheit 3 die Funktionen der aktiven zweiten Ressource-Gruppe 3.2 durch die bislang im Standbymodus befindliche zweite Ressource-Gruppe 1.2 der Hardwareeinheit 2 übernommen. Trotz Ausfall dieser dritten Hardwareeinheit 3 sind immer noch mindestens eine erste 1.1, eine zweite 1.2 (beide sind auf der ersten Hardwareeinheit 1) und eine dritte Ressource-Gruppe 2.3 aktiv. Die Funktion des Systems bleibt also erhalten.

Die Figur 4 zeigt ein Redundanztripel 11 mit jeweils drei Ressource-Gruppen pro Hardwareeinheit 1, 2 und 3 im Normalbetrieb. Auf der ersten Hardwareeinheit 1 ist die erste Ressource-Gruppe 1.1 aktiv. Die zweite Ressource-Gruppe 1.2 ist im zweiten Standbyinodus S2 und die dritte Ressource-Gruppe 1.3 im ersten Standbymodus S1. Ebenso ist auf der zweiten und dritten Hardwareeinrichtung jeweils eine Ressource-Gruppe 2.2 und 3.3 aktiv, die jeweiligen anderen Ressource-Gruppen 2.1, 2.3 und 3.1, 3.2 sind im Standbymodus.

Beim Ausfall der ersten Hardwareeinheit 1 würde zunächst die im ersten Standbymodus befindliche Ressource-Gruppe 2.1 der zweiten Hardwareeinheit 2 diese Funktion übernehmen, bei einem weiteren Ausfall der zweiten Hardwareeinheit 2 würde Ressource-Gruppe 3.1 der dritten Hardwareeinheit 3 diese Funktion übernehmen.

Es werden also mehrere unterschiedliche Ressource-Gruppen auf einer Hardwareeinrichtung in der aktiven Rolle betrieben, die ihre Standby-Partner auf gleichen oder auch unterschiedlichen Hardwareeinrichtungen haben.

Ebenso ist es auch möglich, mehr als eine Ressource-Gruppe auf mehr als einer Hardwareeinrichtung in der Standby-Rolle zu betreiben, um die Verfügbarkeit des Gesamtsystems auch bei weiter reichenden Ausfällen sicherzustellen.

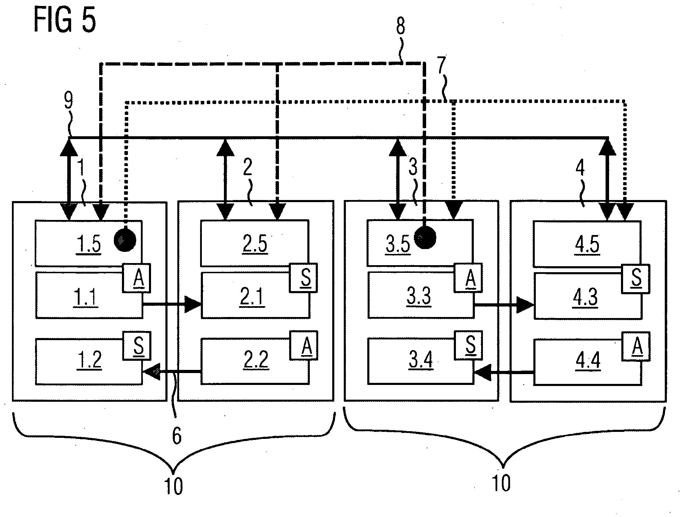

Die Figur 5 zeigt zwei Redundanzpaare 10, bei denen jedes Redundanzpaar 10 durch eine Failover-Kontrollkomponente (Abkürzung: FO-CTRL) 1.5 und 3.5 des anderen Redundanzpaares gesteuert wird.

Die Anordnung in Figur 5 besteht aus vier Hardwareeinrichtungen, von denen jeweils die erste Hardwareeinrichtung 1 und die zweite Hardwareeinrichtung 2 das erste Redundanzpaar 10 und die dritte Hardwareeinrichtung 3 und die vierte Hardwareeinrichtung 4 das zweite Redundanzpaar 10 bilden. Jede Hardwareeinrichtung 1, 2, 3 und 4 wird mit jeweils zwei Ressource-Gruppen betrieben.

Die Zuordnung und gegebenenfalls die Umschaltung der Aktiv/Standby-Rollen wird in dieser Anordnung durch die jeweiligen Failover-Kontrollkomponenten 1.5 und 3.5 vorge-nommen, die auf jeder Hardwareeinrichtung aktiv laufen. Alle Failover-Kontrollkomponenten 1.5, 2.5, 3.5 und 4.5 tauschen zyklisch Statusdaten aus, dargestellt durch die mit einem Strich verbundenen Doppelpfeile mit Bezugszeichen 9, die die Verfügbarkeit der relevanten Ressourcen wiedergeben und als Entscheidungsgrundlage für die Rollenumschaltung dienen.

Die Failover-Kontrollkomponenten 1.5, 2.5, 3.5 und 4.5 sind ihrerseits einer Ressource-Gruppe zugeordnet. So ist die Failover-Kontrollkomponente 1.5 der ersten Hardwareeinheit 1 der ersten Ressource-Gruppe 1.1 zugeordnet. Die Failover-Kontrollkomponente 2.5 der zweiten Hardwareeinheit 2 ist der ersten Ressource-Gruppe 2.1 zugeordnet. Die Failover-Kontrollkomponente 3.5 der dritten Hardwareeinheit 3 ist der dritten Ressource-Gruppe 3.3 zugeordnet. Und die Failover-Kontrollkomponente 4.5 der vierten Hardwareeinheit 4 ist der dritten Ressource-Gruppe 4.3 zugeordnet.

Über diese Zuordnung der Failover-Kontrollkomponenten 1.5, 2.5, 3.5 und 4.5 zu den Ressource-Gruppen haben diese damit selbst eine Aktiv- oder Standby-Rolle. So sind nur die Failover-Kontrollkomponenten 1.5, und 3.5 aktiv, die Failover-Kontrollkomponenten 2.5 und 4.5 sind im Standbymodus. Nur die Failover-Kontrollkomponente in der Aktiv-Rolle übernimmt Steuerungsaufgaben, und zwar jeweils für die Ressource-Gruppen des anderen Redundanzpaares 10. So steuert die aktive Failover-Kontrollkomponente 1.5 die Hardwareeinrichtungen 3 und 4. Die weitere aktive Failover-Kontrollkomponente 3.5 steuert die Hardwareeinrichtungen 1 und 2.

Die jeweils steuernde Komponente wird somit von Fehlern, auf den Hardwareeinrichtungen die sie steuert und deren Verfügbarkeit sie somit mitbestimmt, gerade nicht beeinträchtigt. Gründe für eine Rollenumschaltung können neben dem Ausbleiben der zyklisch verteilten Statusdaten gezielte Problemmeldungen, zum Beispiel über Softwarefehler oder drohende Hardwareausfälle, sein, wie Temperaturanstieg oder Ausfall redundanter Komponenten.

Ebenso realisierbar sind natürlich einfache Paaranordnungen, bei denen die Failover-Kontrollkomponenten sich innerhalb des Redundanzpaares über die Aktiv/Standby-Rollenzuordnung verständigen müssen. Hierdurch reduziert sich die erreichbare Verfügbarkeit des Systems natürlich.

Weiterhin denkbar ist die Addition zusätzlicher Redundanzpaare zur obigen Anordnung, die ihrerseits keine Steuerungsaufgaben für andere Redundanzpaare wahrnehmen. Generell ist die Verteilung der zu steuernden Ressource-Gruppen über die Hardwareeinrichtungen praktisch unabhängig von der Verteilung der sie steuernden Failover-Kontrollkomponenten möglich, so dass auch die weiter oben beschriebenen, komplexeren Verteilungen die Komplexität der Failover-Kontrollkomponenten nicht nennenswert beeinflussen.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zum Nachweis der Verfügbarkeit von Systemkomponenten eines redundant aufgebauten Kommunikationssystems, bei dem Hardwareeinrichtungen (1, 2, 3, 4), die die Systemkomponenten des Kommunikationssystems betreiben, zumindest doppelt vorhanden sind, wobei im Normalbetrieb des Kommunikationssystems manche Systemkomponenten aktiv (A) und die für diese redundant vorhandenen Systemkomponenten im Standbymodus (S, S1 und S2) betrieben werden und bei Ausfall (1.4) einer oder mehrerer Hardwareeinrichtungen (1, 2, 3, 4) die redundant vorhandenen Systemkomponenten die Funktion der bislang aktiv betriebenen Systemkomponenten übernehmen, wobei
die Systemkomponenten und die von diesen zumindest verwendeten Kommunikationskanäle (5), Softwareprozesse (1.1.4 und 1.1.5) und Daten (1.1.1 bis 1.1.3) funktions- und/oder aufgabenabhängig zu Ressource-Gruppen (1.1-1.3, 2.x, 3.x und 4.x) zusammengefasst und betrieben werden und jede Ressource-Gruppe (1.1-1.3, 2.x, 3.x und 4.x) auf mindestens zwei Hardwareeinrichtungen (1, 2, 3, 4) ablauffähig ist und im Normalbetrieb und zum Nachweis der Verfügbarkeit der Systemkomponenten eine Ressource-Gruppe (1.1-1.3, 2.x, 3.x und 4.x) auf genau einer einzigen Hardwareeinrichtung (1, 2, 3, 4) aktiv (A) und die mindestens eine redundante Ressource-Gruppe (1.1-1.3, 2.x, 3.x und 4.x) auf mindestens einer weiteren Hardwareeinrichtung (1, 2, 3, 4) im Standbymodus (S, S1, S2) betrieben wird, wobei die Daten (1.1.1 bis 1.1.3) der aktiven Ressource-Gruppe (1.1) automatisch zu den Daten (2.1.1 bis 2.1.3) der redundant zugeordneten Ressource-Gruppe (2.1) repliziert werden, **dadurch gekennzeichnet,**
**dass** über eine Zuordnung von Failover-Kontrollkomponenten (1.5, 2.5, 3.5, 4.5) zu den Ressource-Gruppen die Failover-Kontrollkomponenten selbst eine Aktiv- oder Standby-Rolle haben,
**dass** bei Bedarf eine Umschaltung der aktiven Ressource-Gruppen (1.1-1.3, 2.x, 3.x und 4.x) in den Standbymodus (S, S1, S2) oder entgegengesetzt durch eine der Failover-Kontrollkomponenten vorgenommen wird,
**dass** nur eine Failover-Kontrollkomponente (1.5, 2.5, 3.5 und 4.5) die Umschaltung vornimmt, die auf einer Hardwareeinrichtung (1, 2, 3, 4) in der aktiven Rolle (A) betrieben wird und jeweils eine Ressource-Gruppe (1.1-1.3, 2.x, 3.x und 4.x) einer anderen Hardwareeinrichtung (1, 2, 3, 4) umschaltet,
**dass** jedes Redundanzpaar (10) von zwei Redundanzpaaren (10) von Hardwareeinrichtungen (1, 2, 3, 4) durch eine Failover-Kontrollkomponente (1.5, 3.5) des anderen Redundanzpaares (10) gesteuert wird.

2. Verfahren nach dem voranstehenden Anspruch 1,
**dadurch gekennzeichnet,**
**dass** im Normalbetrieb auf jeder der Hardwareeinrichtungen (1, 2, 3, 4) mindestens eine der Ressource-Gruppen (1.1-1.3, 2.x, 3.x und 4.x) aktiv (A) betrieben wird.

3. Verfahren nach einem der voranstehenden Ansprüche,
**dadurch gekennzeichnet,**
**dass** angezeigt wird, welche Systemkomponenten und/oder Ressource-Gruppen (1.1-1.3, 2.x, 3.x und 4.x) aktiv (A) oder im Standbymodus (S, S1, S2) betrieben werden.

4. Verfahren nach einem der voranstehenden Ansprüche,
**dadurch gekennzeichnet,**
**dass** zumindest eine Failover-Kontrollkomponente (1.5, 2.5, 3.5 und 4.5) die Umschaltung vornimmt.

5. Verfahren nach einem der voranstehenden Ansprüche,
**dadurch gekennzeichnet,**
**dass** die Hardwareeinrichtungen (1, 2, 3, 4) zumindest als Redundanzpaar (10) betrieben werden, wobei auf einer Hardwareeinrichtung (1, 2, 3, 4) zumindest zwei Ressource-Gruppen (1.1, 1.2 und 2.1, 2.2 und 3.1, 3.2 und 4.1, 4.2) betrieben werden.

6. Verfahren nach einem der voranstehenden Ansprüche,
**dadurch gekennzeichnet,**
**dass** die Failover-Kontrollkomponenten (1.5, 2.5, 3.5 und 4.5) über die Hardwareeinrichtungen (1, 2, 3, 4) verteilt sind, dass die Failover-Kontrollkomponenten (1.5, 2.5, 3.5 und 4.5) für den Betrieb der Ressource-Gruppen (1.1-1.3, 2.x, 3.x und 4.x) relevante Statusinformationen ermitteln und an Partner-Failover-Kontrollkomponenten (1.5, 2.5, 3.5 und 4.5) auf anderen Hardwareeinrichtungen (1, 2, 3, 4) weitergeben.

7. Verfahren nach Anspruch 6,
**dadurch gekennzeichnet,**
**dass** die relevanten Statusinformationen zumindest eine der folgenden Informationen umfassen:
- eine CPU-Leistung
- eine Hardwareverfügbarkeit
- eine Verfügbarkeit von Kommunikationskanälen
- einen Replikationsstatus

8. Verfahren nach einem der voranstehenden Ansprüche,
**dadurch gekennzeichnet,**
**dass** die für den korrekten Ablauf der Failover-Kontrollkomponenten (1.5, 2.5, 3.5 und 4.5) und den Datenaustausch zwischen den Failover-Kontrollkomponenten (1.5, 2.5, 3.5 und 4.5) benötigte CPU-Leistung und Kommunikationsbandbreite durch zumindest eine der folgenden Maßnahmen sichergestellt wird:
- eine Priorisierung
- eine Reservierung von Budgets
- eine Reservierung von Bandbreite
- dedizierte Kommunikationskanäle
- hochverfügbare Kommunikationskanäle

9. Verfahren nach einem der voranstehenden Ansprüche,
**dadurch gekennzeichnet,**
**dass** die Failover-Kontrollkomponenten (1.5, 2.5, 3.5 und 4.5) zyklisch Statusdaten austauschen, die eine Verfügbarkeit von relevanten Ressourcen wiedergeben und als Entscheidungsgrundlage für die Umschaltung dienen.

10. Verfahren nach einem der voranstehenden Ansprüche,
**dadurch gekennzeichnet,**
**dass** die Umschaltung begründet ist durch zumindest eine der folgenden Ereignisse:
- ein Ausbleiben von zyklisch verteilten Statusdaten
- eine Problemmeldung
- eine Meldung eines Softwarefehlers
- eine Meldung eines drohenden Hardwareausfalls
- eine Meldung eines Temperaturanstiegs
- eine Meldung eines Ausfalls einer redundanten Komponente

11. Verfahren nach einem der voranstehenden Ansprüche,
**dadurch gekennzeichnet,**
**dass** die Failover-Kontrollkomponenten (1.5, 2.5, 3.5 und 4.5) jeweils einer der Ressource-Gruppen (1.1-1.3, 2.x, 3.x und 4.x) zugeordnet sind.

12. Verfahren nach einem der voranstehenden Ansprüche,
**dadurch gekennzeichnet,**
**dass** im Normalbetrieb eine im Hinblick auf die Ausnutzung der Hardwareeinrichtungen (1, 2, 3, 4) gezielte Verteilung der Ressource-Gruppen (1.1-1.3, 2.x, 3.x und 4.x) auf die Hardwareeinrichtungen (1, 2, 3, 4) erfolgt.

## Claims

1. A method for verifying the availability of system components of a communication system of redundant design in which hardware devices (1, 2, 3, 4) that operate the system components of the communication system are available at least in duplicate, with some system components being actively operated (A) in the normal mode of the communication system and the system components redundantly available for these being operated in standby mode (S, S1 and S2) and the redundantly available system components taking over the function of the previous actively operated system components in the event of failure (1.4) of one or more hardware devices (1, 2, 3, 4), the system components and the communication channels (5), software processes (1.1.4 and 1.1.5) and data (1.1.1 to 1.1.3) at least used by these being combined relative to function and/or task into resource groups (1.1 - 1.3, 2.x, 3.x and 4.x) and operated, and each resource group (1.1 - 1.3, 2.x, 3.x and 4.x) being able to run on at least two hardware devices (1, 2, 3, 4) and, in normal mode and to verify the availability of the system components, one resource group (1.1 - 1.3, 2.x, 3.x and 4.x) being actively operated (A) on precisely one single hardware device (1,2,3,4), and the at least one redundant resource group (1.1 - 1.3, 2.x, 3.x and 4.x) being operated in standby mode (S, S1, S2) on at least one further hardware device (1, 2, 3, 4), with the data (1.1.1 to 1.1.3) of the active resource group (1.1) being automatically replicated to the data (2.1.1 to 2.1.3) of the redundantly assigned resource group (2.1),
**characterized in that**,
by assigning failover control components (1.5, 2.5, 3.5, 4.5) to the resource groups, the failover control components themselves have an active role or standby role,
**in that** the active resource groups (1.1-1.3, 2.x, 3.x and 4.x) are switched over to standby mode (S, S1, S2) or vice versa by one of the failover control components as required,
**in that** only one failover control component (1.5, 2.5, 3.5 and 4.5) that is being operated in the active role (A) on a hardware device (1, 2, 3, 4) carries out the switchover and in each case switches over a resource group (1.1-1.3, 2.x, 3.x and 4.x) of another hardware device (1, 2, 3, 4),
**in that** each redundant pair (10) of two redundant pairs (10) of hardware devices (1, 2, 3, 4) is controlled by a failover control component (1.5, 3.5) of the other redundant pair (10).

2. The method as claimed in the preceding claim 1,
**characterized in that**
at least one of the resource groups (1.1-1.3, 2.x, 3.x and 4.x) is actively operated (A) on each of the hardware devices (1, 2, 3, 4) in the normal mode.

3. The method as claimed in either of the preceding claims,
**characterized in that**
it is indicated which system components and/or resource groups (1.1 - 1.3, 2.x, 3.x, 4.x) are being actively operated (A) or being operated in standby mode (S, S1, S2).

4. The method as claimed in one of the preceding claims,
**characterized in that**
at least one failover control component (1.5, 2.5, 3.5 and 4.5) carries out the switchover.

5. The method as claimed in one of the preceding claims,
**characterized in that**
the hardware devices (1, 2, 3, 4) are operated at least as a redundant pair (10), with at least two resource groups (1.1, 1.2 and 2.1, 2.2 and 3.1, 3.2 and 4.1, 4.2) being operated on one hardware device (1, 2, 3, 4).

6. The method as claimed in one of the preceding claims,
**characterized in that**
the failover control components (1.5, 2.5, 3.5 and 4.5) are distributed over the hardware devices (1, 2, 3, 4), and **in that** the failover control components (1.5, 2.5, 3.5 and 4.5) determine status information that is relevant to the operation of the resource groups (1.1-1.3, 2.x, 3.x and 4.x) and pass it on to partner failover control components (1.5, 2.5, 3.5 and 4.5) on other hardware devices (1, 2, 3, 4).

7. The method as claimed in claim 6,
**characterized in that**
the relevant status information comprises at least one of the following items of information:
- a CPU capacity
- a hardware availability
- an availability of communication channels
- a replication status.

8. The method as claimed in one of the preceding claims,
**characterized in that**
the CPU capacity and communication bandwidth required for the correct running of the failover control components (1.5, 2.5, 3.5 and 4.5) and for the data exchange between the failover control components (1.5, 2.5, 3.5 and 4.5) are ensured by at least one of the following measures:
- a prioritization
- a reservation of budgets
- a reservation of bandwidth
- dedicated communication channels
- high-availability communication channels.

9. The method as claimed in one of the preceding claims,
**characterized in that**
the failover control components (1.5, 2.5, 3.5 and 4.5) cyclically exchange status data which describe availability of relevant resources and are used as the basis for a decision on the switchover.

10. The method as claimed in one of the preceding claims,
**characterized in that**
the switchover is justified by at least one of the following events:
- an absence of cyclically distributed status data
- a problem report
- a report of a software error
- a report of imminent hardware failure
- a report of a temperature increase
- a report of failure of a redundant component.

11. The method as claimed in one of the preceding claims,
**characterized in that**
the failover control components (1.5, 2.5, 3.5 and 4.5) are each assigned to one of the resource groups (1.1-1.3, 2.x, 3.x and 4.x).

12. The method as claimed in one of the preceding claims,
**characterized in that**,
in the normal mode, the resource groups (1.1-1.3, 2.x, 3.x and 4.x) are distributed among the hardware devices (1, 2, 3, 4) in a specific manner with regard to the utilization of the hardware devices (1, 2, 3, 4).

## Revendications

1. Procédé permettant de détecter la disponibilité de composants système dans un système de communication à architecture redondante, dans lequel des dispositifs hardware (1, 2, 3, 4) qui font fonctionner les composants système du système de communication sont présents au moins en double, certains composants systèmes, pendant le fonctionnement normal du système de communication, fonctionnant activement (A) et les composants systèmes redondants par rapport à ceux-ci fonctionnant en mode d'attente (S, S1 et S2) et, en cas de défaillance (1.4) d'un ou de plusieurs dispositifs hardware (1, 2, 3, 4), les composants systèmes redondants prenant en charge la fonction des composants systèmes fonctionnant activement jusqu'alors, les composants systèmes et les canaux de communication (5) au moins utilisés par ceux-ci, processus logiciels (1.1.4 et 1.1.5) et données (1.1.1 à 1.1.3) étant regroupés et fonctionnant en groupes de ressources (1.1 - 1.3, 2.x, 3.x et 4.x) en fonction des fonctions et/ou des tâches et chaque groupe de ressources (1.1 - 1.3, 2.x, 3.x et 4.x) étant exécutable sur au moins deux dispositifs hardware (1, 2, 3, 4) et, en fonctionnement normal et pour détecter la disponibilité des composants système, un groupe de ressources (1.1 - 1.3, 2.x, 3.x et 4.x) fonctionnant activement (A) sur exactement un seul dispositif hardware (1, 2, 3, 4) et l'au moins un groupe de ressources redondant (1.1 - 1.3, 2.x, 3.x et 4.x) fonctionnant sur au moins un autre dispositif hardware (1, 2, 3, 4) en mode d'attente (S, S1, S2), les données (1.1.1 à 1.1.3) du groupe de ressources actif (1.1) étant automatiquement répliquées sur les données (2.1.1 à 2.1.3) du groupe de ressources redondant associé (2.1), **caractérisé en ce que** :
- les composants de contrôle de failover jouent eux-mêmes un rôle actif ou un rôle en mode d'attente via une association de composants de contrôle de failover (1.5, 2.5, 3.5, 4.5) aux groupes de ressources ;
- en cas de besoin, une commutation des groupes de ressources actifs (1.1 - 1.3, 2.x, 3.x et 4.x) en mode d'attente (S, S1, S2) ou inversement est effectuée par l'un des composants de contrôle de failover ;
- seule effectue la commutation un composant de contrôle de failover (1.5, 2.5, 3.5 et 4.5) qui fonctionne activement (A) sur un dispositif hardware (1, 2, 3, 4) et qui commute respectivement un groupe de ressources (1.1 - 1.3, 2.x, 3.x et 4.x) d'un autre dispositif hardware (1, 2, 3, 4) ;
- chaque paire redondante (10) de deux paires redondantes (10) de dispositifs hardware (1, 2, 3, 4) est commandée par un composant de contrôle de failover (1.5, 3.5) de l'autre paire redondante (10).

2. Procédé selon la revendication précédente 1, **caractérisé en ce que**, en fonctionnement normal, au moins l'un des groupes de ressources (1.1 - 1.3, 2.x, 3.x et 4.x) fonctionne activement (A) sur chacun des dispositifs hardware (1, 2, 3, 4).

3. Procédé selon l'une des revendications précédentes, **caractérisé en ce qu'**il est affiché quels composants système et/ou groupes de ressources (1.1 - 1.3, 2.x, 3.x et 4.x) fonctionnent activement (A) ou en mode d'attente (S, S1, S2).

4. Procédé selon l'une des revendications précédentes, **caractérisé en ce qu'**au moins un composant de contrôle de failover (1.5, 2.5, 3.5 et 4.5) effectue la commutation.

5. Procédé selon l'une des revendications précédentes, **caractérisé en ce que** les dispositifs hardware (1, 2, 3, 4) fonctionnent au moins en tant que paire redondante (10), au moins deux groupes de ressources (1.1, 1.2 et 2.1, 2.2 et 3.1, 3.2 et 4.1, 4.2) fonctionnant sur un dispositif hardware (1, 2, 3, 4).

6. Procédé selon l'une des revendications précédentes, **caractérisé en ce que** :
- les composants de contrôle de failover (1.5, 2.5, 3.5 et 4.5) sont répartis sur les dispositifs hardware (1, 2, 3, 4) ;
- les composants de contrôle de failover (1.5, 2.5, 3.5 et 4.5) déterminent des informations de statut pertinentes pour le fonctionnement des groupes de ressources (1.1 - 1.3, 2.x, 3.x et 4.x) et les transfèrent à des composants de contrôle de failover (1.5, 2.5, 3.5 et 4.5) partenaires sur d'autres dispositifs hardware (1, 2, 3, 4).

7. Procédé selon la revendication 6, **caractérisé en ce que** les informations de statut pertinentes comprennent au moins l'une des informations suivantes :
- une puissance de CPU,
- une disponibilité hardware,
- une disponibilité de canaux de communication,
- un statut de réplication.

8. Procédé selon l'une des revendications précédentes, **caractérisé en ce que** la puissance de CPU requise pour l'exécution correcte des composants de contrôle de failover (1.5, 2.5, 3.5 et 4.5) et pour l'échange de données entre les composants de contrôle de failover (1.5, 2.5, 3.5 et 4.5) et la largeur de bande de communication sont assurés par au moins l'une des mesures suivantes :
- une priorisation,
- une réservation de budgets,
- une réservation de largeur de bande,
- des canaux de communication dédiés,
- des canaux de communication à haute disponibilité.

9. Procédé selon l'une des revendications précédentes, **caractérisé en ce que** les composants de contrôle de failover (1.5, 2.5, 3.5 et 4.5) échangent cycliquement des données de statut qui reproduisent une disponibilité de ressources pertinentes et servent de base de décision pour la commutation.

10. Procédé selon l'une des revendications précédentes, **caractérisé en ce que** la commutation est justifiée par au moins l'un des événements suivantes :
- absence de données de statut réparties cycliquement,
- un message de problème,
- un message d'erreur logicielle,
- un message de menace de défaillance hardware,
- un message d'augmentation de température,
- un message de défaillance d'un composant redondant.

11. Procédé selon l'une des revendications précédentes, **caractérisé en ce que** les composants de contrôle de failover (1.5, 2.5, 3.5 et 4.5) sont respectivement associés à l'un des groupes de ressources (1.1-1.3, 2.x, 3.x et 4.x).

12. Procédé selon l'une des revendications précédentes, **caractérisé en ce que** se produit, en fonctionnement normal, une distribution des groupes de ressources (1.1-1.3, 2.x, 3.x et 4.x) sur les dispositifs hardware (1, 2, 3, 4), ciblée au regard de l'utilisation des dispositifs hardware (1, 2, 3, 4).
